Europäisches Patentamt

European Patent Office

Office européen des brevets

(11) Publication number: 0 374 576
A2

# EUROPEAN PATENT APPLICATION

(21) Application number: 89122384.4

(22) Date of filing: 05.12.89

(51) Int. Cl.5: C08G 61/08, C08F 279/02, C08C 19/28, //(C08F279/02, 232:00)

(30) Priority: 06.12.88 JP 306944/88

(43) Date of publication of application:
27.06.90 Bulletin 90/26

(84) Designated Contracting States:
AT BE CH DE ES FR GB GR IT LI LU NL SE

(71) Applicant: NIPPON ZEON CO., LTD.
6-1, Marunouchi 2-chome
Chiyoda-ku Tokyo 100(JP)

(72) Inventor: Okumura, Kin-ichi
1-301,2-26, Kajiwara
Kamakura-shi Kanagawa(JP)
Inventor: Nakano, Munetoshi
477-1, Sasaoki
Kurashiki-shi Okayama(JP)
Inventor: Sugawara, Tomoo
481, Miyauchi Nakahara-ku
Kawasaki-shi Kanagawa(JP)
Inventor: Yamato, Motoyuki
Ooiso Koma Haitsu 2-232 2-21, Koma
Ooiso-cho
Naka-gun Kanagawa(JP)

(74) Representative: von Kreisler, Alek,
Dipl.-Chem. et al
Patentanwälte Von Kreisler-Selting-Werner
Deichmannhaus am Hauptbahnhof
D-5000 Köln 1(DE)

(54) Polymerization of heat-treated reaction product of dicyclopentadiene and elastomer.

(57) A reaction product is polymerized with a norbornene-type monomer in the presence of a metathesis ring-opening catalyst system to produce a thermoset polymeric product which has high glass transition temperature, improved impact strength, and leaves clean mold surfaces where it was molded. In a preferred embodiment, the reaction product is obtained by heating dicyclopentadiene with an elastomer having olefinic bonds in presence or absence of at least one norbornene-type monomer. The reaction product is in the form of an oily substance.

# POLYMERIZATION OF HEAT-TREATED REACTION PRODUCT OF DICYCLOPENTADIENE AND ELASTOMER

## Background of Invention

Methods of ring opening polymerizing norbornene monomers such as dicyclopentadiene (DCP) and methyl tetracyclododecene (MTD), in molds and sometimes adding elastomers to improve the strength, are known.

For example, Japanese Kokai Patent No. Sho 58-129013 discloses a method of producing thermosetting DCP homopolymer by reaction injection molding (RIM) using a metathesis catalyst system.

Although the modulus of elasticity on bending of the polymer is decreased somewhat when an elastomer is added to one or both of the two types of undiluted reaction solutions in this case, it is shown to be possible to increase the impact strength 5- to 10-fold.

Japanese Kokai Patent No. Sho 59-51911 also discloses RIM of cyclic olefins that contain norbornene rings such as DCP and MTD. Addition of an elastomer to improve the impact strength in the undiluted reaction solution constructed from the monomer is also demonstrated in this bulk polymerization method.

The ring opened polymers obtained by these methods have comparatively good impact resistance, high modulus of elasticity, heat resistance, etc., among the properties required of engineering plastics. However, it is still difficult to say that they are satisfactory in terms of today's strict demands.

For example, it has been pointed out that the glass transition temperature (Tg) of DCP homopolymers obtained by these methods is not satisfactory. A method of copolymerizing a comonomer that has at least two reactive double bonds, such as tetracyclododecadiene, trimethylolpropane-tris-(5-norbornene-2-carboxylate), etc., so as to increase the number of crosslinkings by cleavage during polymerization has been disclosed as a method of improving this point (Japanese Kokai Patent No. Sho 61-179214). However, this method requires the use of a specific monomer which is difficult to obtain and this represents a drawback from the economic standpoint.

It was also understood that whitening of the surface of the molded goods is a problem when DCP reaction solution admixed with elastomer to improve the impact strength is bulk polymerized.

US Patent No. 4,703,098 discloses the use of a mixture of DCP and oligomer thereof obtained by heat treatment of DCP as the monomer. Although thermosetting resin with improved glass transition temperature can be produced from said heat treatment product, white micropowder precipitates during storage and said heat treatment product is difficult to handle.

For example, some of the trimer and the tetramer form a white micropowder and precipitate when the concentration of cyclopentadiene trimer and tetramer present in the heat treatment product increases. This phenomenon becomes more conspicuous when the concentration of trimer and tetramer is more than 15% by weight or when the storage temperature is less than 10° C. This precipitation phenomenon leads to blockage of the conduits of the molding equipment and causes fluctuations in the composition and properties of the thermosetting resin. Procedures such as heating the heat treatment product and storing it or stirring the storage tank, etc. are required to prevent such problems. Furthermore, the impact resistance is harmed although the glass transition temperature rises when there is much trimer and tetramer.

## Summary of Invention

The present invention concerns a method of producing thermosetting resin by bulk polymerization of a norbornene monomer. More specifically, it concerns a method of producing thermosetting resin that has good processability, high heat deformation or distortion temperature, improved impact strength and improved surface properties of the molded goods. The resin is produced by polymerizing reaction product with or without at least one norbornene monomer in presence of a metathesis ring-opening catalyst system. The reaction product is obtained by heat-treating at least one norbornene monomer together with an elastomer. The preferred norbornene monomer is dicyclopentadiene.

## Detailed Description of Invention

EP 0 374 576 A2

This invention is based on the discovery that an oily product alone or with at least one norbornene monomer can be bulk polymerized in the presence of an elastomer by means of a metathesis ring-opening system to produce a thermosetting polymeric product. The resulting polymeric product has good surface property, good processability, high glass transition point, and improved impact resistance especially after oxidation of the surfaces thereof. The oily product is a reaction product that is obtained when dicyclopentadiene is heated together with an elastomer having olefinic double bonds in the molecule.

The present invention is directed to a method of producing a thermosetting resin characterized by bulk polymerization of an oily product (A) obtained by heat treatment of a mixture of dicyclopentadienes and an elastomer having olefinic double bonds in the molecule or by bulk polymerizing a mixture of the oily product (A) and a norbornene monomer (B) in the presence of a metathesis catalyst in a mold. The present invention is also directed to a method of producing thermosetting resin characterized by bulk polymerizing a mixture of the aforementioned oily product (A) or a mixture of said product (A) and norbornene monomer (B) and elastomer (C) in the presence of a metathesis catalyst in a mold. The present invention is also directed to a reaction injection molding polymeric product composed of a monomer component made from the aforementioned oily product (A) or a mixture of said product (a) and norbornene monomer (B) and a metathesis catalyst.

The elements of the present invention are explained in detail below.

Any one or a mixture of norbornene monomers or norbornene-type monomers can be heated together with an unsaturated elastomer to produce the reaction product or the oily product, as referred to above. Preferred norbornene monomer is selected from substituted and unsubstituted dicyclopentadienes, such as dicyclopentadiene itself and dihydrodicyclopentadiene. Because of its availability and other factors, most preferred is dicyclopentadiene itself.

The raw material dicyclopentadiene (DCPs) used in the present invention need not necessarily be refined beforehand as long as their purity is at least 90% by weight, preferably at least 95% by weight. Their heat treatment products have high activity as monomers and give ring opened polymers with good properties.

Dicyclopentadienes usually contain low boiling point impurities and high boiling point impurities as impurities. Specific examples of the former include hydrocarbons having 4 to 6 carbon atoms, codimerization products with chain-like conjugate diolefins such as cyclopentadiene and butadiene, isoprene, piperylene, (e.g., vinyl norbornene, isopropenyl norbornene, propenyl norbornene), and the like. Examples of the latter include trimers of cyclopentadiene, codimerization products of cyclopentadiene and isoprene or methyl bicyclononadiene, and the like. The hydrocarbon compounds having 4 to 6 carbon atoms were removed sufficiently in the past because they caused poor molding in reaction injection molding. However, there is satisfactory polymerization activity in the present invention even when the purity is less than 98% by weight. The standard is met even if a large amount is present since cyclopentadiene and methylcyclopentadiene among the hydrocarbon compounds having 4 to 6 carbon atoms react with the elastomer that has olefinic double bonds in the molecule during heat treatment.

The DCPs used in the present invention are DCP and alkyl-substituted forms thereof such as methyl-substituted and ethyl-substituted forms. The raw material DCPs are endoisomers, exoisomers or mixtures of these. DCPs are decomposed into cyclopentadiene and alkyl-substituted forms thereof by heating.

The elastomers having olefinic double bonds used in the present invention are solid or liquid capable of Diels-Alder reaction with cyclopentadiene. Specific examples thereof include natural rubber, polybutadiene, polyisoprene, styrene-butadiene random copolymer, styrene-butadiene block copolymer, styrene-isoprene block copolymer, acrylonitrile-butadiene copolymer, chloroprene rubber, liquid polybutadiene, liquid polyisoprene, etc. Hydrocarbon elastomers among these are used frequently.

The mixture ratio of DCP and elastomer having olefinic double bonds is from 1 to 50 parts by weight, preferably 2 to 30 parts by weight. more preferably 2 to 20 parts by weight, of elastomer per 100 parts by weight of DCP. Large amounts of cyclopentadiene oligomers are produced when there is an excess amount of DCP. An oily substance is not formed when too much DCP is used but a waxy product is obtained. Not only is the waxy product difficult to handle, but it also harms the impact resistance of the thermosetting resin obtained. Conversely, when there is too much elastomer. the viscosity of the reaction solution becomes too high and handling becomes difficult.

As for the heat treatment conditions, the mixture of DCP and elastomer having olefinic double bonds is heated for 0.1 to 20 hours. preferably 0.2 to 10 hours, at 110 to 220° C, preferably 150 to 200° C, in an inert atmosphere of nitrogen, etc.

The heat treatment reaction form may be either batch or continuous treatment. Heating is conducted after dissolving the elastomer in the DCP. In addition, it is also possible to supply mixtures of DCP and elastomer after decomposing the DCP to cyclopentadiene (CP) by heating to the aforementioned tempera-

3

ture in order to heighten the Diels-Alder reactivity. Heat treatment should be conducted at 50°C or above in this case.

A solvent that is inert in the heat treatment reaction such as benzene, toluene, xylene, can be present during heat treatment. However, treatment without using solvent to the greatest extent possible is preferred because use of a solvent necessitates a procedure to remove the solvent after heat treatment.

Heat treatment is preferably conducted in the presence of an antioxidant. Phenolic antioxidants are good. Examples include 4,4'-dioxydiphenyl, hydroquinone monobenzyl ether, 2,4-dimethyl--t-butylphenol, 2,6-di-t-butylphenol, 2,6-diamylhydroquinone, 2,6-di-t-butyl-p-cresol, 4-hydroxymethyl-2,6-di-t-butylphenol, 4,4'-methylene-bis-(6-t-butyl-o-cresol), butylated hydroxyanisole, phenol condensation products, butylenated phenol, dialkylphenosulfide, high molecular weight polyvalent phenol, and bisphenol. polyvalent phenols such as t-butylcatechol, hydroquinone, resorcinol, and pyrogallol can also be used.

Amount of antioxidant used is usually from 10 to 10,000 ppm, preferably 100 to 3000 ppm, in relation to the DCP. It is also preferable that a radical polymerization inhibitor be present.

In addition to the aforementioned antioxidants, examples of radical polymerization inhibitors include quinones such as p-benzoquinone, p-quinonedioxime, and carbanoxyl; nitro compounds such as tri-p-nitrophenylmethyl and diphenylpicryl hydrazyl; nitroso compounds such as nitrosobenzene; amino compounds such as p-phenyldiamine; organic sulfur compounds such as diemthyldithiocarbamate and phenothiazine; inorganic compounds such as iodine, sulfur and sodium nitrite. Amount of radical polymerization inhibitor added is from 100 to 3000 ppm in relation to DCP.

The heat treatment product obtained can be used as is as the raw material for producing the thermosetting resin by ring opening polymerization. However, it is preferable to remove the low boiling point substances, such as cyclopentadienes (CPs), which are produced by decomposition of the DCPs.

The reaction product obtained by heat treatment of the DCP and elastomer having olefinic double bonds is generally a colorless, transparent oil. The viscosity thereof is less than 10,000 centipose measured at 30°C, preferably less than 5000 centipose, more preferably less than 3000 centipose. The product contains unreacted DCPs, elastomer, CP-added elastomer, CP oligomers, and the like.

The heat treatment product in the present invention is preferably one that has at least 1% by weight, more preferably at least 2% by weight, of CP-added elastomer. it is difficult to obtain the expected effects of the present invention when the proportion of CP-added elastomer is too small.

The proportion of CPs added to the olefinic double bonds in the elastomer is from 5 to 90, preferably 10 to 70, per 100 double bonds. The precipitation of a white substance on the surface of the molded goods and mold is suppressed when more of the reaction product is added. The impact resistance of the thermosetting resin is also vastly improved when the heat treatment reaction product is used in combination with an elastomer. The reason for this can be assumed to be that the CP-added elastomer acts as a compatibilizing agent with DCP and the subsequently added elastomer.

The content of oligomers having as their major component trimers and tetramers of CPs in the reaction product is usually no more than 40% by weight, preferably 5 to 25% by weight. The heat treatment product becomes milky or waxy and difficult to handle when the content of the oligomers is too high. The impact resistance, especially the impact resistance after heat deterioration resistance testing, conversely decreases although the glass transition temperature of the thermosetting resin rises as the amount of the oligomer increases.

Norbornene or norbornene-type monomer (B) can be used in mixture with the heat treatment product (A) of DCP and elastomer. Norbornene monomers are substituted and unsubstituted norbornene, dicyclopentadiene, dihydrodicyclopentadiene, tricyclopentadiene, tetracyclopentadiene and tetracyclododecene.

Specific examples thereof include dicyclopentadiene, tetracyclododecene, methyl tetracyclododecene, ethyl tetracyclododecene, ethylidene tetracyclododecene, phenyltetracyclododecene, 2-norbornene, 5-methyl-2-norbornene, 5,6-dimethyl-2-norbornene, 5-ethyl-2-norbornene, 5-butyl-2-norbornene, 5-hexyl-2-norbornene, 5-octyl-2-norbornene, 5-dodecyl-2-norbornene, norbornene, norbornadiene, ethylidene norbornene, vinyl norbornene, phenyl norbornene, and the like.

Among these, tricyclic monomers represented by DCP and tetracyclic monomers such as tetracyclododecene and methyl tetracyclododecene are preferred. DCP is especially preferred from the economic standpoint.

The mixture ratio of oily product (A) and norbornene monomer (B) should be selected as is appropriate to the goal. However, amount of oily product (A) is from 100 to 5% by weight, preferably 100 to 10% by weight, and amount of the norbornene monomer (B) is from 0 to 95% by weight, preferably 0 to 90% by weight. The mixture preferably contains at least 1% by weight, more preferably at least 2% by weight, of CP-added elastomer.

4

When the norbornene monomer is DCP, the glass transition temperature of the thermosetting resin drops as the proportion of oily product (A) in the mixture decreases.

While DCP solidifies at approximately 33°C, the heat reaction product is liquid even at 10°C. A liquid is easy to handle and transport. The heat treatment reaction product and norbornene monomer can be mixed easily using a mixer such as power mixer, static mixer, impulsion mixer, and the like.

A rubbery elastomer can also be present in the polymerization of the reaction product alone or together with at least one norbornene-type monomer, primarily to improve the impact resistance.

Elastomers that can be used herein include natural rubber, polybutadiene, styrene-butadiene copolymer (SBR), polyisoprene, styrene-butadiene-styrene block copolymer (SBS)m styrene-isoprene-styrene block copolymer (SIS), ethylene-propylene-diene terpolymer (EPDM), ethylene-vinyl acetate copolymer (EVA) and hydrogenated forms of these. These elastomers can be used individually or in mixtures of two or more types.

The elastomers are usually used by dissolving them beforehand in the reaction solution that contains the aforementioned product (A) or mixture of said product (A) and norbornene monomer (B).

The viscosity of the reaction solution can be adjusted to an appropriate level by dissolving the elastomer when the monomer-containing solution has a low viscosity.

The proportion of these elastomers combined is usually from 0.5 to 20 parts by weight, preferably 1 to 15 parts by weight, per 100 parts by weight of the thermosetting resin. The impact resistance imparting effects are small when little elastomer is combined. Conversely, the viscosity of the reaction solution becomes too high and the molding processability deteriorates or the heat deformation temperature and modulus of elasticity on bending of the thermosetting resin composition drop when the proportion is too large.

The catalyst used in the present invention may be any of the metathesis ring-opening catalyst systems known as catalysts for bulk polymerization of norbornene monomers. This includes the catalysts disclosed by Japanese Kokai Patents Nos. Sho 58-127728, Sho 58-129013, Sho 59-51911, Sho 60-79035, Sho 60-186511, and Sho 61-126115; US Patents 4,380,617, 4,400,340, 4,481,344; and European Patents 142,861 and 181,642.

Examples of metathesis catalysts include halides, oxyhalides, oxides, and organic ammonium salts of tungsten, molybdenum and tantalum. Appropriate examples of such catalysts include tungsten compounds such as tungsten hexachloride, tungsten oxytetrachloride, tungsten oxide, tridodecylammonium tungstate, methyl tricaprylammonium tungstate, tri(tridecyl)ammonium tungstate, and trioctylammonium tungstate; molybdenum compounds such as molybdenum pentachloride, molybdenum oxytrichloride, tridodecylammonium molybdate, methyl tricaprylammonium molybdate, tri(tridecyl)ammonium molybdate, and trioctylammonium molybdate; and tantalum compounds such as tantalum pentachloride. Amount the known catalysts, it is preferable to use catalysts that are soluble in the oily substance and the norbornene monomer used in the reaction. Organic ammonium salts are frequently used from this viewpoint. The catalyst can be solubilized by prior treatment with an alcoholic compound or a phenolic compound when the catalyst is a halide. If necessary, Lewis bases such as benzonitrile, tetrahydrofuran, and chelating agents such as acetylacetone and acetoacetic acid alkyl esters can also be used in combination. These can prevent early or premature polymerization.

Examples of activators or cocatalysts which are used together with the above catalysts include alkylaluminum halide, alkoxyaluminum halide, aryloxyaluminum halide, and organic tin compounds. Appropriate examples of such activators or cocatalysts include ethyl aluminum dichloride, diethyl aluminum monochloride, ethyl aluminum sesquichloride, diethyl aluminum iodide, ethyl aluminum diiodide, propyl aluminum dichloride, propyl aluminum diiodide, isobutyl aluminum dichloride, ethyl aluminum dibromide, methyl aluminum sesquichloride, methyl aluminum sesquibromide, tetrabutyl tin, and alkylaluminum halide and alcohol preliminary reaction products.

Among such activators or cocatalysts, alkoxyalkyl aluminum halide and aryloxyalkyl aluminum halide are procedurally advantageous because they have a proper pot life at room temperature even when the catalyst components are mixed, as described more fully in Japanese Kokai Patent Sho 59-51911 and US Patent 4,426,502. Although it is a problem that polymerization begins immediately upon mixing the catalyst in the case of alkyl aluminum halide, the beginning of polymerization can be delayed in this case by using the activator in combination with a regulator selected from ethers, esters, ketones, nitriles and alcohols. This is more fully disclosed in Japanese Kokai Patents Sho 58-129013, Sho 61-120814 and US Patent 4,400,340.

It is necessary to consider the apparatus and procedures so that even polymerization systems with a short pot life can be used when these regulators are not employed. Halogenated hydrocarbons such as carbon tetrachloride and hexachlorocyclopentadiene, metal halides such as silicon tetrachloride, magnesium tetrachloride, and lead tetrachloride can also be used in combination in addition to the catalyst and activator.

Japanese Kokai Patent Sho 60-79035 and US Patent 4,481,344 disclose this aspect more fully.

The metathesis catalyst is usually used in a quantity of from 0.05 to 1 part by weight, preferably 0.1 to 0.7 part by weight, per 100 parts by weight of the total monomer, i.e., total amount of product (A) and norbornene monomer (B), if the norbornene monomer is used. The activator or cocatalyst is usually used in a range of 0.1 to 200, preferably 2 to 10 in relation to the catalyst component, on a molar basis.

Although it is preferable to use the metathesis catalyst and activator dissolved in the monomer, they can also be used by being suspended or dissolved in a small amount of solvent within the range that does not essentially harm the properties of the product.

Pursuant to the polymerization procedure of the present invention, the heat reaction product with or without a norbornene monomer and metathesis ring-opening catalyst system are placed in a mold of the appropriate shape and a thermosetting resin is produced by polymerization method that causes bulk polymerization within the mold. A small amount of inert solvent may also be present as long as it is essentially bulk polymerization.

The heat reaction product with or without a norbornene monomer is usually divided into two reaction solutions and placed in separate containers. The metathesis catalyst is added to one and the activator or the cocatalyst to the other. When an elastomer is used in the polymerization procedure, it is dissolved in either one or both of the two reaction solutions.

The two reaction solutions are mixed and then injected into a mold maintained under an elevated temperature. Ring opening polymerization takes place in the mold and the thermosetting resin is thus obtained.

A known impinging mixing apparatus can be used to mix the two reaction solutions, such as a conventional RIM molding apparatus. In such a case, the containers that hold the two reaction solutions are connected to two separate streams. The two streams are mixed instantaneously by the mixing head of the RIM machine. Next, they are injected into the high temperature mold and instantaneously bulk polymerized thereby to obtain the thermosetting resin.

Although an impinging mixing apparatus can be used in this way, the present invention is not limited to such mixing means. When the pot life is one hour or longer at room temperature, the streams can be injected in several increments into preheated molds, as described in Japanese Kokai Patent Sho 59-51911 and US Patent 4,426,502. The two streams can also be injected continuously after mixing of the two reaction solutions has been completed in the mixer. The advantage of this method is that the apparatus can be made smaller and procedure under low temperature is possible in comparison with an impact mixing apparatus.

The method of using the two reaction solutions is not limited in the present invention. As can easily be interpreted by those in the field, various forms are also possible, such as making a third stream by introducing a monomer and desired additives into a third container.

The mold temperature is usually at least 30°C, preferably 40 to 200°C, more preferably 50 to 120°C. The molding pressure usually ranges from 0.1 to 100 kg.cm². The polymerization time should be selected as is appropriate. However, it is usually shorter than approximately 20 minutes, preferably less than 5 minutes, but may be longer.

The reaction solution is usually stored or processed in an inert gas atmosphere such as nitrogen gas. However, the mold need not necessarily be sealed by inert gas.

The properties of the thermosetting resin of the present invention can be improved by combining various additives such as fillers, foaming agents, flame retardants, slidability imparting agents, antioxidants, pigments, coloring agents, polymer improving agents, and the like, or by using reinforcing materials such as glass fibers, carbon fibers, aramid fibers, and glass mats. Examples of fillers include inorganic fillers such as milled glass, carbon black, talc, calcium carbonate, and mica.

Polymer improving agents include hydrogenated heat polymerized DCP resin in addition to elastomers. These are normally dissolved in one or both of the reaction solutions.

The additives can be mixed beforehand with one or both of the reaction solutions or introduced into the mold cavity directly.

The bulk polymer obtained by the method of the present invention is a thermosetting resin that becomes a hard solid as it cools. The glass transition temperature (Tg) depends on the monomer composition, however, it is higher than that of DCP homopolymers. It is usually at least 120°C, preferably at least 140°C.

The impact resistance is also far superior to the conventional method of making CP oligomers into copolymers. The retention of the impact resistance after heat deterioration is especially conspicuous.

No precipitation of a white substance is found on the surface of the molded goods or mold. The external appearance of the molded goods is improved and mold cleaning during molding operations is also facilitated.

The present invention is explained more concretely below through practical examples. In the practical examples, comparative examples and reference examples, parts and percentages are based on the weight standard unless specifically noted otherwise.

## EXAMPLE 1

100 parts of 98.5% pure dicyclopentadiene (DCP) that contained 2000 ppm of 2,6-di-tert-butylphenol (BHT) and 100 ppm of t-butylcatechol and 10 parts of polybutadiene (Nipol BR-1220, made by Nippon Zeon and containing 97% cis-1,4 double bonds of all the double bonds present) were placed in an autoclave. After sufficient nitrogen substitution, the temperature was raised to 170°C and the contents reacted for four hours. The autoclave was subsequently cooled to 80°C and 1.9 parts of a low boiling point substance were distilled out of the autoclave by applying 5 torr vacuum. It was then cooled to room temperature and 108.1 parts of colorless, transparent oil were obtained. The viscosity of this oil was approximately 1500 centipose at 30°C and the freezing point was less than 0°C.

. The composition of the oily product was as follows:

| Unreacted DCP | 65% |
|---|---|
| CP trimer and tetramer | 23% |
| CP-added polybutadiene | 12% |

This oily product was placed in two containers. 50 parts of DCP, 0.4 part of diethyl aluminum chloride (DEAC), 0.15 part of n-propanol, 0.36 part of silicon tetrachloride, and 5 parts of styrene-isoprene-styrene block copolymer (Kraton 1170, made by Shell) were added to one container per 50 parts of the oil product. This was solution A.

Fifty parts of DCP, 0.3 part of tri(tridecyl)ammonium molybdate and 0.3 part of carbon black (#1000 made by Mitsubishi Kasei) were added to the other container per 50 parts of oily product. This was solution B.

Solutions A and B were separately supplied to a power mixer in the volumetric ratio of 1:1. The mixed solutions were than quickly injected into a mold heated to 70°C that had a space volume of 200 mm x 200 mm x 3 mm. The injection time was approximately 10 seconds. Reaction was conducted for 3 minutes within the mold. This series of procedures was conducted in a nitrogen gas atmosphere.

Measurement, by differential scanning calorimeter, of the glass transition point of the black molded product obtained in this way showed it to be 159°C. The DuPont impact value or drop impact strength, in accordance with JIS K-7211. showed the rupture strength of 550 kg.cm when a weight with an end radius of 7.9 mm was dropped.

The Dupont impact value after treating a test piece for 72 hours at 80°C was 250 kg.cm. No whitening could be found on the surface of the molded product and no adhesion of film or stickiness could be found on the mold surface.

## EXAMPLE 2

A mixture with DCP of the composition shown in Table 1 was produced using the heat treatment product of Example 1. Solutions A and B were prepared in the same way as in Example 1 and molded goods were obtained by molding. The properties of these molded goods are shown in Table 1.

As for the freezing point of the mixture, the mixture of the present invention did not freeze at all even at 0°C although DCP freezed at 33°C.

Table 1.

| | | Example of the present invention | | Comparative example |
|---|---|---|---|---|
| Experiment no. | | 2-1 | 2-2 | 2-3 |
| DCP/heat treatment product | | 0/100 | 70/30 | 100/0 |
| Glass transition temperature (Tg) ($^\circ$C) | | 181 | 156 | 150 |
| DuPont impact value (kg$\cdot$cm) | | 550 | 500 | 250 |
| DuPont impact value after 72 hrs. @ 80$^\circ$C. (kg$\cdot$cm) | | 250 | 200 | 100 |
| Condition of molded surface | | No whitening | No whitening | Partial whitening |
| Condition of mold surface | | Clean | Clean | Partial thin film adhesion |

## EXAMPLE 3

An oily product was obtained by exactly the same procedure as in Example 1 except that the amounts of the raw material DCP and polybutadiene supplied were as shown in Table 2. The composition of the oily product obtained, the existence of cloudiness of the solution, and the freezing point are shown in Table 2.

Molded goods were obtained in the same way as in Example 1 using these oily products. The properties of the molded goods obtained are summarized in Table 2.

Table 2.

| | | | Comparative example | Examples of the present invention | |
|---|---|---|---|---|---|
| Experiment no. | | | 3-1 | 3-2 | 3-3 |
| Amount of raw material supplied (parts by weight) | | DCP | 100 | 100 | 100 |
| | | Polybutadiene | 0 | 15 | 5 |
| Composition of reaction product (%) | | Unreacted DCP | 40 | 61 | 59 |
| | | CP trimer and tetramer | 60 | 18 | 34 |
| | | CP-added polybutadiene | - | 21 | 7 |
| Condition of reaction product | | Cloudiness | Waxy, much white precipitate | Somewhat cloudy oil | Colorless, transparent oil |
| | | Freezing point (°C) | 50 | 0> | 0> |
| R I M m o l d e d g o o d s | Glass transition temperature (°C) | | 185 | 157 | 163 |
| | DuPont impact value (kg·cm) | | 150 | 500 | 550 |
| | DuPont impact value after 72 hrs. @ 80°C. (kg·cm) | | 50 | 200 | 250 |
| | Condition of molded goods surface | | Partial whitening | No whitening | No whitening |
| | Condition of mold surface | | Partial thin film adhesion | Clean | Clean |

EXAMPLE 4

Oily products of the composition shown in the table were obtained by conducting heat treatment in the same way as in Example 1 except that 100 parts of 98.5% pure DCP that contained 3000 ppm of BHT and 10 parts of the elastomers shown in Table 3 were used. Molded goods were obtained in the same way as in Example 1 using these oily products. The properties of these molded goods obtained are shown in Table 3.

Table 3.

| | | Examples of the present invention | | |
|---|---|---|---|---|
| Experiment no. | | 4-1 | 4-2 | 4-3 |
| Elastomer used in heat treatment (weight) | | Liquid polybutadiene (Polyoil/6D made by Nippon Zeon) | Polybutadiene (Nipol BR-1240 made by Nippon Zeon, vinyl group content 71%) | SIS Kraton 1170, made by Shell) |
| Composition of reaction product (%) | Unreacted DCP | 62 | 61 | 64 |
| | CP trimer and tetramer | 23 | 21 | 25 |
| | CP-added elastomer | 15 | 18 | 11 |
| Condition of reaction product | Cloudiness | Colorless, trans- parent oil | Colorless, trans- parent oil | Colorless, transparent oil |
| | Freezing point (°C) | 0> | 0> | 0> |
| RIM molded goods | Glass transition temperature (°C) | 160 | 158 | 161 |
| | DuPont impact value (kg·cm) | 500 | 400 | 450 |
| | DuPont impact value after 72 hrs. @ 80°C. (kg·cm) | 200 | 150 | 200 |
| | Condition of molded goods surface | No whitening | No whitening | No whitening |
| | Condition of mold surface | Clean | Clean | Clean |

The present invention makes it possible to economically obtain thermosetting resin with excellent drop impact strength and heat distortion or deformation temperature (glass transition temperature) in comparison to conventional poly-DCP polymer by using an easy to handle monomer that is an oil obtained using as the raw materials dicyclopentadiene and an elastomer having olefinic double bonds. Whitening of the surface of the molded goods can be suppressed during molding and there is little contamination of the mold. Undiluted reaction solutions for reaction injection molding have good molding workability.

## Claims

1. Product comprising a reaction product polymerized in presence of a metathesis ring-opening catalyst system, comprising at least one norbornene-type monomer, cyclopentadiene oligomers, and cyclopentadiene-added elastomer containing double bonds.

2. Product of claim 1 wherein said reaction product before polymerization is in the form of an oily substance having viscosity at 30°C of less than 5,000 cps and contains at least 1% by weight of said cyclopentadiene-added elastomer.

3. Product of claim 2 wherein said norbornene-type monomer is dicyclopentadiene and wherein amount of said cyclopentadiene oligomers in said reaction product is less than 40% by weight, said product having glass transition temperature of at least 120°C.

4. Product of claim 1 wherein said norbornene-type monomer is dicyclopentadiene; amount of said cyclopentadiene oligomers is 5 to 25 weight percent based on the weight of said reaction product and said cyclopentadiene oligomers are selected from cyclopentadiene trimers, cyclopentadiene tetramers, and mixtures thereof; proportion of cyclopentadiene added to the double bonds is 5 to 90 per 100 double bonds; and said product is rigid and thermoset.

5. Product comprising reaction product polymerized in presence of metathesis ring-opening catalyst system, said reaction product is obtained by heating at least one norbornene-type monomer with 1 to 50 weight parts elastomer having double bonds, per 100 weight parts of at least one norbornene-type monomer.

6. Product of claim 5 wherein said norbornene-type monomer is dicyclopentadiene and amount of said elastomer is 2 to 30 weight parts per 100 weight parts of dicyclopentadiene.

7. Product of claim 6 that is rigid and has glass transition temperature of at least 140°C, wherein said reaction product is an oily substance having viscosity at 30°C of less than 3000 cps.

8. Product of claim 5 wherein said reaction product is polymerized in presence of up to 90% by weight of a norbornene-type monomer per 100% by weight of said reaction product.

9. Product of claim 8 wherein said product is rigid and has glass transition temperature of at least 140°C, wherein said reaction product is a transparent oily substance having viscosity of less than 3000 cps measured at 30°C.

10. Product of claim 8 wherein said norbornene-type monomer that is polymerized with said reaction product is selected from substituted and unsubstituted norbornene, dicyclopentadiene, tricyclopentadiene, tetracyclopentadiene, tetracyclododecene, and mixtures thereof.

11. Product of claim 10 wherein said elastomer is selected from natural rubbers, polybutadienes, polyisoprenes, styrene-butadiene random copolymers, styrene-isoprene block copolymers, acrylonitrile-butadiene copolymers, chloroprene rubbers, and mixtures thereof; wherein said product is rigid and has glass transition temperature of at least 140°C, and wherein said reaction product is oily substance having viscosity at 30°C of less than 3000 cps.

12. Product of claim 11 wherein said reaction product is obtained by heating dicyclopentadiene and said elastomer in the presence of antioxidant and radical polymerization inhibitor at a temperature of 110 to 250°C for the duration of 0.2 to 10 hours in an inert atmosphere and removing the low boiling point substances, amount of said antioxidant is 100 to 3000 ppm in relation to dicyclopentadiene and amount of said radical polymerization inhibitor is also 100 to 3000 ppm in relation to dicyclopentadiene.

13. Product of claim 12 wherein said antioxidant is selected from phenolic antioxidants and mixtures thereof.

14. Method comprising the steps of heating a mixture comprising dicyclopentadiene and an elastomer that has double bonds at a temperature of 110 to 250°C for 0.1 to 20 hours and recovering an oily product having viscosity at 30°C of less than 5000 cps.

15. Method of claim 14 wherein said elastomer is selected from natural rubbers, polybutadienes, polyisoprenes, styrene-butadiene random copolymers, styrene-isoprene block copolymers, acrylonitrile-butadiene copolymers, chloroprene rubbers, and mixtures thereof; wherein said product is rigid and has glass transition temperature of at least 140°C, and wherein said reaction product is oily substance having viscosity at 30°C of less than 3000 cps.

16. Method of claim 14 wherein said mixture also includes up to 90% by weight of at least one norbornene-type comonomer, based on the weight of dicyclopentadiene.

17. Method of claim 16 wherein said norbornene-type comonomer is selected from substituted and unsubstituted norbornene, dicyclopentadiene, tricyclopentadiene, tetracyclopentadiene, tetracyclododecene, and mixtures thereof.

18. Method of claim 17 wherein amount of said elastomer is 2 to 30 weight parts per 100 weight parts of dicyclopentadiene.

19. Method of claim 18 including the step of removing the low boiling point substances from said oily product.

20. Method of claim 18 wherein said mixture also includes 100 to 3000 ppm of antioxidant, based on dicyclopentadiene.

21. Product comprising reaction product and an effective amount of a catalyst component selected from metathesis ring-opening catalysts, metathesis ring-opening cocatalysts, and mixtures thereof, said reaction product is obtained by heating a mixture comprising norbornene-type monomer and an elastomer having double bonds at a temperature of 110 to 250°C for 0.1 to 20 hours.

22. Product of claim 21 wherein said norbornene-type monomer in said mixture is dicyclopentadiene and amount of said elastomer in said mixture is 2 to 30 weight parts per 100 weight parts of dicyclopentadiene.

23. Product of claim 22 wherein said mixture also includes 100 to 3000 ppm of antioxidant, based on dicyclopentadiene in said mixture.

24. Product of claim 23 wherein said mixture also includes up to 90% by weight of at least one norbornene-type comonomer selected from substituted and unsubstituted norbornene, dicyclopentadiene, tricyclopentadiene, tetracyclopentadiene, tetracyclododecene, and mixtures thereof; wherein said product is rigid and has glass transition temperature of at least 140°C, and wherein said reaction product is oily substance having viscosity at 30°C of less than 3000 cps.

25. Product of claim 23 wherein said oily substance is devoid of low boiling point substances, said product is in a liquid form at room temperature.